# EUROPEAN PATENT APPLICATION

(11) **EP 2 017 614 A2**
(43) Date of publication of application: **21.01.2009**
(21) Application number: 08160609.7
(22) Date of filing: 17.07.2008
(51) Int. Cl.: G01N 29/265, G01N 29/44, G01N 29/06

(54) **Method for controlling weldings**

(30) Priority: 20.07.2007 IT MI20071457
(71) Applicant: Studio V.M. di Bruschi Giampaolo & C. S.a.s., 44100 Ferrara (FE) (IT)
(72) Inventor: Bruschi, Giampaolo, 44100, FERRARA (FE) (IT)
(74) Representative: Bonvicini, Davide

(57) **Abstract**

Method for performing a welding analysis in a material, said method comprising the steps of scanning the welding through at least one ultrasonic probe, and storing the information detected during said scan on an acquisition unity.

## Description

In one of his general aspects, the present invention refers to a method for performing a welding analysis in a material by scanning using a ultrasonic probe, in such a manner to obtain a storage of the information acquired during such scanning.

The invention also refers to a device adapted to display and/or store the images relative to a scan with a ultrasonic probe of a welding in a material.

The present invention represents an improvement of the current methods of analysis in the field of welding material technology.

Welding is a connection of solid parts whose objective is that of providing a continuity of the characteristics of the material of the parts thus joined. Generally, welding implies the fusion of the parts being joined, reducing the volumetric or planar discontinuities (hereinafter also referred to as "flaw") inside the welded joint and in the adjacent area thermally altered to the maximum. This peculiarity of welding is of considerable importance both when a uniform mechanical resistance is required and when a uniform resistance against external aggressions (for example, corrosion) or against time (resistance to stress) is required.

Welding is mainly used for providing vessels subjected to substantial stresses, mainly due to pressure as, for example, in the case of pipes or boiler elements, or for the construction of more or less complex support structures (carpentry) or for shipbuilding.

The safety requirements linked to the use of welding, especially in the field of the pressure vessels and civil engineering, have set criteria to ensure the reliability of weldings.

The provisions (for example ASME VIII div. 1 $ 2, ASME 2235-9, and EN 1712-1713-1714) provide for that such weldings be approved by specialized professionals who certify the quality of said weldings through studies, analysis, nondestructive or destructive tests.

Once performed, the welded joints are subjected to more or less extensive nondestructive tests depending on the reliability required of the joint. Such tests are extremely critical, require a lot of time and use of special equipment.

Typically, known in the prior art are two methods of volumetric control of weldings: radiographic and ultrasonic testing.

Through the radiographic techniques, it is possible to highlight a large number of discontinuities, such as for example porosity, inclusions, blowings, cracks, worms, cinder inclusions and lack of penetration, present in industrial manufactured items, castings or weldings.

The operating principle of such techniques is based on the alterations that the electromagnetic radiations are subjected to when they encounter a flaw on their path inside the material.

A beam of electromagnetic waves, with extremely high photonic energy (high frequency) and strongly ionized (X-rays or Gamma-rays), passing through the object to be tested, is absorbed with exponentially law depending on the thickness and density of the material passed through.

The passing X-rays or Gamma-rays and differentially attenuated impress a photographic plate arranged behind the object to be tested. The photographing process creates a bidimensional image of the radiographed object. In this image the thickness, density and composition variations of the object are displayed as image density variations (in practice grey-scale variations). The evaluation is performed by comparing the variations of the radiographic density with the known characteristics of the object, or with radiographic standards produced by the same object of acceptable quality.

However, the radiographic analysis have some disadvantages.

Firstly, it is a bidimensional representation of a three-dimensional object, with the consequence that the radiographic image of most objects is inaccurate both in terms of dimension and shape, and, in any case, non-exhaustive to determine the actual dimension of the discontinuities.

Furthermore, in the conventional radiography, the position of a flaw in the volume of the piece cannot be determined means of a single exposure and the depth in the direction of the rays cannot be determined in an accurate manner.

The radiographic analysis are also disadvantageous given that they require the interruption of the operations, thus leading to wasting time, as well as not being able to develop the results of the tests in real time.

Lastly, issues regarding the health of workers, who are constantly exposed to electromagnetic radiations and thus obliged to be under strict medical supervision by law, should be taken into account.

The inspection of the weldings by means of ultrasonics instead is a nondestructive method in which the highfrequency sound waves are introduced into the material to be tested, in order to highlight surface or interior flaws, measure the thickness of the materials as well as the distance and the dimension of the various flaws.

The ultrasonics technique is essentially based on the phenomenon of the transmission of an acoustic wave in the material. Ultrasonics are elastic vibration waves with frequency typically between 1 and 10 MHz; however, for some applications, the field can be extended from 20 KHz up to over 200 MHz.

Ultrasonic waves are generated by exploiting the piezoelectric properties of some materials; these properties consist in the capacity of these materials to contract and riexpand upon subjection to the action of an electric field. If the electric field has a suitable frequency, the vibrations of the material produce elastic waves of ultrasonic frequency.

The energy absorbed by the flaw, hit by the incidental waves, causes it to vibrate in turn emitting elastic waves with frequency typical of its resonance and variously delayed. Therefore, the signal which is then detected by a typical electrical transducer is very complex, in that it is the result of the sum of many waves with equal frequency, but delayed, and other waves with different frequency, also delayed with respect to each other. Such signal holds all the information about the dimensions, geometry, and nature of the obstacle encountered by the ultrasonic incident beams.

The localization and the dimensioning of the flaws is usually performed by means of a correlation process between the ultrasonic beam features, the physical and geometric features of the material, the parameters (amplitude and pulse delay) and the coordinates of the scanning trajectory.

One of the major difficulties in the application of the conventional method of analysis by means of ultrasonic waves, lies in the fact that the images, detected from said probe during said scanning, are displayed on a ultrasonic flaw detector only at that given moment of detection by the probe.

Therefore, considering the fact that the indications provided by the signals detected by such method are not easily interpretable by the operator who practically performs the scanning of the weld (an operator generally without the technical knowledge required for a correct interpretation of such signals), raises the problem of providing a method of analysis capable of allowing a qualified technician to examine such signals once the scanning is completed, in such a manner to identify and evaluate the signals detected correctly and thus ensure good quality of the results obtained.

It is therefore not currently possible for a skilled technician to check the detections obtained by means of a probe at a moment subsequent to the one of the detections themselves, thus requiring a new scanning in case of doubts regarding the validity of the data obtained.

A further drawback of a conventional method of analysis with ultrasonic waves consists in the fact that the operator usually records manually, in real time, on a conventional service paper, the information regarding the signals as they are detected, with the concrete possibility of mistakes or incomplete transcription of the information gathered, as well as an unacceptable approximation of the detection starting point and end point of the flaws that are used for measuring of the same flaws.

Therefore, the object of the present invention is that of overcoming the abovementioned drawbacks by developing a welding analysis method through ultrasonic waves which is easy to use, inexpensive and capable of ensuring a good reliability and good quality of results.

According to the first aspect of the invention, this problem is solved through a method for performing a welding analysis in a material, defined in claim 1 attached.

As a matter of fact, according to the invention, it was observed that a method for performing a welding analysis in a material, said method comprising the steps of:
a) scanning the welding by means of at least one ultrasonic probe; and
b) storing the information detected during said scanning on an acquisition unity,
   is capable of allowing the evaluation of the quality of the welding by skilled technician once said scanning is completed, assessing the acquired images and stored on said at least one acquisition unit, as well as checking for the correctness of the approach adopted by the technician who performed the scanning.

Within the scope of the present invention the term "information detected during said scanning" means that the images, the continuous sequences of the subsequent images (thus forming a video) corresponding to the various sections of the welding as detected by means of said scanning, as well as alphanumeric data regarding the type of scanning performed, material type, welding type, position and dimensions of the flaws observed in said welding.

Therefore, in this manner, the fact of basing the result of the analysis on a single interpretation of the various situations observed "in real time" during the scanning by the technician who performed the scanning is eliminated. This fact represents a significant improvement in the quality of the interpretations of the signals detected by means of scannings using ultrasonic probes, therefore providing welding analysis of high technical reliability.

Preferably, said information comprises continuous sequences of subsequent images (forming a video) detected during said scanning.

Preferably, as said image sequences are detected and transmitted by said at least one probe, they are displayed on a ultrasonic flaw detector connected to said at least one acquisition unit.

Preferably, said image sequences are stored on at least one video acquisition unit in the standard graphic format, for example JPEG, MPEG, WMV, and other digital and/or analogue format typically known by men skilled in the art.

Preferably, said probe used in said method comprises a transducer element for producing and detecting ultrasonic waves.

Preferably, said transducer element comprises a piezoelectric element, representing the active element of the probe, adapted to generate an electric charge when subjected to deformation. Furthermore, said piezoelectric element is also adapted to deform when subjected to an electric charge.

Preferably, an element for measuring the angular position and the axial position, in short referred to as "encoder" hereinafter, is connected to said probe, in such a manner that each movement of the probe corresponds to an analogous movement of the encoder, which converts the measurements taken into electrical signals. Said encoder is also connected to said at least one acquisition unit.

Preferably, said step a) of the method of the present invention, further comprises the steps of:
a1) detecting the reference position of said at least one probe at the start of said scanning,
a2) moving said at least one probe to a position for detecting the information regarding the welding, and
a3) detecting said detection position.

Preferably, said step a1) is performed by means of a first counter connected to said encoder, said first counter being activated when said scanning of the welding starts. In this manner, said first counter records the initial position of the encoder, corresponding to the position assumed by the probe with respect to the welding when the scanning of the welding itself starts. Typically, a counter is a device adapted to record the number of times a particular event or process occurs. The device can be of the mechanical, electromechanical or electronic type.

The method according to the present invention allows analysing, by means of ultrasonic probes, any type of welding, such as for example the "linear" ones, that is the type of weldings that do not require the calculation of the distance of the probe from the welding axis, such as for example for circumferential and longitudinal weldings for vessels or pipes, and the "circular" weldings, that is the type of weldings for which the value of the distance detected by the probe must be related to the distances of the indications from said initial position of the probe, such as for example for weldings between vessel nozzles and platings or plate/pipe couplings.

During step a2) of the method of the present invention, said at least one probe is moved from said initial reference position to a position for detecting information regarding the welding.

Preferably, said probe is moved by means of a motor. However, said probe can also be moved by means of other conventional methods known in the art.

Preferably, said step a2) further comprises the subsequent movement of said detection position to new positions for detecting information regarding the welding, up to the completion of said scanning of the welding.

Preferably, said first counter detects (step a3) each of said new detection positions assumed by said at least one probe during said step a2).

In this manner, said first counter detects all the detection positions assumed by said at least one probe during scanning of the welding, with the advantage that such positions can be checked and analysed at any time, in particular at the end of the scanning.

Preferably, according to the method of the present invention, while said first counter detects all the detection positions assumed by said at least one probe when scanning the welding, the image sequences, detected and transmitted by said at least one probe when the probe itself is at said detection positions, are displayed on said ultrasonic flaw detector and stored on said at least one video acquisition unit.

In this manner, the data detected by said first counter regarding the positions of said at least one probe when scanning and the image sequence stored by said at least one acquisition unit integrate contributing to the formation of a complete information framework regarding the welding that were subjected to scanning.

According to the method of the present invention, when said at least one probe, during said scanning, checks for the presence of a flaw in said welding, said method further comprises the steps of d) measuring the dimension of said flaw.

Preferably, said step d) comprises the steps of:
d1) recording the position of said at least one probe when the latter starts checking for the presence of said flaw ("start flaw" position);
d2) recording the position of said at least one probe when the latter completes checking for the presence of said flaw ("end flaw" position); and
d3) calculating the distance between the "start flaw" and "end flaw" positions.

In particular, the position of the probe with respect to the point at which the start of the flaw is detected is recorded, so as to have a first point of reference useful for measuring the flaw itself.

Subsequently, all the positions of the probe at the points in which said probe continues receiving the flaw presence signals are recorded until the last position of the probe in which the flaw is detected is recorded.

Preferably, said steps d1) and d2) are performed by means of a second counter.

Preferably, the dimension of the flaw is measured taking into account the longitudinal distance between the "start flaw" and "end flaw" positions, as detected by said second counter, and the measurement of the depth of the flaw available by means of said ultrasonic flaw detector.

The identification and dimensioning of the flaws also generally occurs through a correlation process between the characteristics of the ultrasonic beam, the physical and geometric characteristics of the material, the parameters (amplitude and pulse delay) and the coordinates of the scanning trajectory.

Preferably, the dimensions of said flaws are compared with the flaw parameters predefined in compliance with the applicable international codes, such as for example ASME div. 1&2, ASME 2235-9, and EN 1712-1713-1714.

Preferably, according to the method of the present invention, the image sequence regarding the welding sections in which the presence of said flaw had been detected are stored on at least one video acquisition unit.

In this manner, it is possible to re-examine at the end of the scanning, the images of said welding sections in which said flaws had been detected.

Preferably, the method of the present invention comprises the further steps of printing, on a medium, some photograms of the stored images deemed particularly relevant, such as for example images bearing welding flaws.

In this manner, it is possible to annex a prove of the detected flaw to a report, for example on paper.

Analogously, it is also possible to obtain a print on a paper medium bearing all the detection positions of said at least one probe during said scanning.

The method of the present invention can also be used to analyse weldings made up of several components. In case, at the end of a first scanning by means of said probe, all the components of the welding have not been analysed, the method of the present invention is repeated for a number of times necessary for the detection of the information regarding the remaining welding component/s to be analysed.

For such purpose, each time a scanning of a new welding component is started subsequent to one for which the scanning had just been completed, said counters are reactivated in such a manner that there is a certain degree of overlapping of information acquired for the two subsequent scannings. In this manner, the risk of losing dome information between one scanning and the other is avoided, thus ensuring a continuity bin then acquisition of the information regarding two subsequent welding components.

According to a particular embodiment of the present invention, it is also possible to use two or more ultrasonic probes, each of which being used in an independent manner with respect to each other.

According to a second aspect, the present invention refers to a device as defined in claim 15 attached.

As a matter of fact, according to the invention it was observed that a device adapted to store the images and/or image sequences detected during at least one scanning by means of at least one ultrasonic probe of a welding in a material, said device comprises a video acquisition adapted to be connected to ultrasonic flaw detector, is capable of allowing a visual control of the various sections of the analysed welding.

In particular, said device allows the possibility to display said image sequences again at will.

Preferably, said image sequences were detected by said at least one probe during the scanning of welding sections in which flaws were detected.

Preferably, said device according to the present invention is connected to an element for measuring the angular and/or axial position (referred to as "encoder"), in turn connected to said at least one probe, in such a manner that each movement of the probe corresponds to an analogous movement of the encoder.

In this manner, by means of a counter connected to said encoder, it is possible to know the position of the probe with respect to the welding at any time when scanning the welding.

Preferably, said encoder and said one probe are accommodated in a moveable element, such as for example a carriage. Preferably, said moveable element comprises at least one wheel comprising magnets.

Said video acquisition unit comprises typical elements and accessories of such unit, such as for example a colour video, battery power supply and/or by means of 110/220 V 50/60 Hz through connections with a suitable cable, on/off button, keyboard, mouse, video output, USB connection and network connection.

Preferably, some of said elements and accessories of the video acquisition unit, such as for example, encoder, keyboard and mouse, are IP65 watertight. In this manner, said acquisition unit is capable of operating both indoors and outdoors.

Preferably, in addition, said video acquisition unit comprises further operation elements or buttons, such as for example buttons for resetting the encoder, connection between the video acquisition unit and encoder, LED for signalling malfunctions of the encoder management card.

Preferably, said video acquisition unit is connected to said ultrasonic flaw detector by means of an interface represented by a video output of if VGA or analogue type.

Said ultrasonic flaw detector can be any type of apparatus used for conventional analysis of weldings by means of ultrasonic probes provided with the aforementioned interfaces.

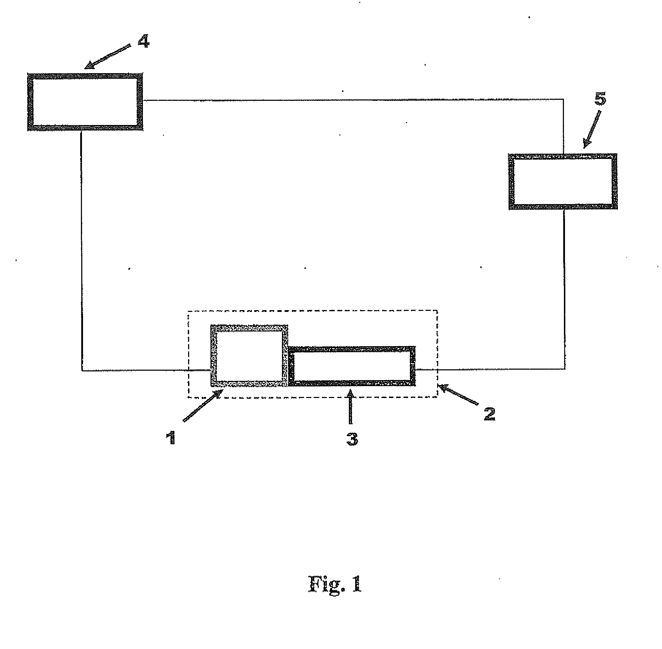

Further characteristics and advantages of the method and of the device of the present invention shall be clearer from the following detailed description of some of its preferred embodiments, solely provided for exemplifying and non-limiting purposes with reference to the attached drawing (figure 1), a schematic view of the device of the present invention.

Referring to figure 1, according to a first embodiment of the method of the present invention, an ultrasonic probe 1 comprises a transducer element which in turn comprises a piezoelectric element (not shown in the figure), is arranged on probe-bearing carriage 2 in order to perform a scanning by means of ultrasonic waves of a welding. Such welding, in this first embodiment, is of the linear type (for example used in a pipe) and it is made up of a single component.

Such probe-bearing carriage 2 is also provided with an encoder 3, connected to said probe 1 in such a manner the each movement of the probe 1 corresponds to an analogous movement of the encoder 3. The probe-bearing carriage 2 is made of light aluminium alloys and carbon fibre to guarantee rigidity and lightness at the same time and it is provided with two wheels (not shown), arranged on the opposite side of the encoder 3 and enclosing two permanent neodymium magnets, in such a manner to maintain the probe-bearing carriage 2 easily aligned with respect to the welding, thus also guaranteeing the distance of the of the transducer with respect to the welding.

As shown in figure 1, such encoder 3 is connected to the video acquisition unit 5 and to a ultrasonic flaw detector 4.

In particular, the video acquisition unit 5 comprises (not shown in the figure), on the front side, an 8 inch LCD video, a button for resetting a first counter, a button for resetting a second counter, a connection to the second counter, a LED for signalling malfunctions in the control of such counters, a network connection and USB connections, 12V outputs, and, at the rear side, a VGA video output, the 110/220 V 50/60 Hz power supply and the on/off button. The ultrasonic flaw detector 4 in particular is provided with a monitor, mouse and keyboard (not shown in the figure).

According to this first embodiment, the welding to be analysed being of the linear type, calculation of the distance of the probe from the axis of the welding is not required for setting the initial reference position of the probe 1 in an efficient manner with respect to the welding.

The method of the present invention comprises the activation of a first counter connected to said encoder 3, in such a manner to detect the reference position of the probe 1 when the analysis of the welding starts (reference point 0). Such reference position can be observed on the video acquisition unit 5.

The probe bearing carriage 2 provided with a ultrasonic probe 1 and an encoder 3 is arranged in proximity to a welding, in such a manner that the axis of the transducer is at the reference point 0.

Before starting scanning the welding to be analysed, all the parameters adapted classify the welding to be analysed, such as for example date, time, type of welding, number of components making up the welding to be analysed, reference points etc, are set.

Subsequently, the probe-bearing carriage 2 is moved, thus effectively starting the scanning of the welding component to be analysed by means of the ultrasonic probe 3. As the probe 1 and the encoder 3 connected to it move, the first counter detects their new positions making the visible on the video acquisition unit 5.

During said movements, when the presence of a flaw is detected on the welding component, the probe 1 is moved back up to the point at which the presence of the flaw is observed; then, a second counter which records the reference position of the probe 1 is activated at the precise point at which the flaw to be analysed was first observed.

Once the second counter has been activated, scanning restarts along the original direction until it determines a point at which the flaw is no longer observed. In order to establish the final point of the flaw, analogously to the operation carried out above to establish in an accurate manner the initial reference point of the flaw, the probe 1 is taken back to the point at which the presence of the flaw is no longer observed. Thus, the second counter records the position of the probe 1 at said final point of the flaw. It is thus possible to calculate the length of the flaw, knowing the initial and final points at which the flaw itself was observed. This information, added to the one provided by the ultrasonic flaw detector 4 regarding the depth of the detected flaw, allow to calculate the shape and dimension of the flaw, also by means of a comparison with the predefined parameters of the flaws.

As the scanning of the welding is performed by means of the welding 1, all the images of the welding component at the various positions assumed by the probe 1, are displayed on the ultrasonic flow detector 4, both at the flaws and in the absence of flaws. At the same time, all the positions assumed by the probe 1 and the corresponding image sequences are stored by means of a management software on the video acquisition unit 5, in such a manner to generate a correct traceability of the scanning of the welding for a subsequent review of data and images thus acquired.

Upon acquisition of the information regarding the start and end of the flaw, the second counter is reset once again and the scanning of the welding component continues to check for the presence of other flaws, repeating the operations described above, until the scanning of the entire welding component is completed.

At this point, the scanning is blocked and the acquisitions of the reference positions of the probe and the recording of the acquired images are suspended.

According to a second embodiment of the method of the present invention, described is a method for performing a ultrasonic analysis of welding, still of the linear type, like in the first embodiment, but being made up of two components in this second embodiment.

In this case, the method is analogous to the one described previously according to the first embodiment of the present invention, differing on the fact that two consecutive scannings are performed for the two welding components. For such purpose, the reference point 0 of the scanning of the second element shall be such to correspond to one of the last positions indicated by such first counter at the end of the scanning of the first component, in such a manner that there is a given overlapping of acquired information for the scanning of the two subsequent components. In this manner, the risk of losing some information between a scanning and the other is avoided, thus guaranteeing continuity in the acquisition of information regarding two subsequent welding components.

According to a third embodiment of a method of the present invention, a probe 1, like the one described above, is used in order to be able to perform ultrasonic waves analysis of a welding of the circular type, for example between nozzles and platings for vessels.

The welding being in this case of the circular type, the value of the distance read by the encoder must be related to the welding axis in order to be able to set the reference point 0 in a correct manner. In order to guarantee the distance of the transducer with respect to the welding in a suitable manner, a spacer is associated to the probe-bearing carriage 2 in such a manner to position the wheels onto the external surface of the nozzle.

Upon correct setting of the reference point 0, the method for analysing the circular type of welding in this third embodiment is analogous to the one described referring to the first embodiment for performing the scanning of the linear type of welding.

Obviously, the embodiments described above shall be deemed as mere non-limiting illustrations of some possible embodiments of the method and the device of the present invention, clearly being understood that any step regarding the device and/or any element regarding the device itself can be modified by a man skilled in the art to meet specific and required needs, still remaining in the scope of the claims. For example, a plurality of probes can be advantageously used for an analysis of a multiple welding or more than two counters can be used for additional recordings.

## Claims

1. Method for performing a welding analysis in a material, said method comprising the steps of:
a) scanning the welding through at least one ultrasonic probe, and
b) storing the information detected during said scan on an acquisition unity.

2. Method for performing a welding analysis according to claim 1, wherein said information comprises image sequences detected during said scanning.

3. Method for performing a welding analysis according to claim 2, wherein said image sequences are displayed on a ultrasonic flaw detector connected to said acquisition unity.

4. Method for performing a welding analysis according to claim 2 or 3, wherein said image sequences are stored on a video acquisition unit.

5. Method for performing a welding analysis according to any one of the preceding claims, wherein at least one element for measuring the angular position of said probe is connected to said at least one probe.

6. Method for performing a welding analysis according to any one of the preceding claims, wherein said step a) comprises the steps of:
a1) detecting the reference position of said at least one ultrasonic probe when starting said scanning,
a2) moving said at least one probe from said initial reference position to a position for detecting information concerning the welding, and
a3) detecting said detection position.

7. Method for performing a welding analysis according to claim 6, wherein said step a1) is performed by means of a first counter connected to said element for measuring the angular position.

8. Method for performing a welding analysis according to claim 6 or 7, wherein said step a3) is performed by means of said first counter.

9. Method for performing a welding analysis according to any one of the preceding claims from 6 to 8, wherein said step a2) further comprises the subsequent move from said detection position to new positions for detecting the information regarding the welding up to the completion of said welding scanning, each of said new detection positions being detected by said first counter.

10. Method for performing a welding analysis according to any one of the preceding claims, wherein, when said at least one probe, during said scanning, detects the presence of a flaw in said welding, said method further comprises the step d) of measuring the dimension of said flaw.

11. Method for performing a welding analysis according to claim 10, wherein said step d) comprises the steps of:
d1) recording the position of said at least one probe when said probe checks for the presence of said flaw ("start flaw" position),
d2) recording the position of said at least one probe when said probe completes checking for the presence of said flaw ("end flaw" position), and
d3) measuring in, longitudinal direction, the distance between the "start flaw" and the "end flaw" positions.

12. Method for performing a welding analysis according to claim 11, wherein said steps d1) and d2) are performed by means of a second counter.

13. Method for performing a welding analysis according to any one of the preceding claims from 10 to 12, wherein measuring of said flaw (step d) is performed using the longitudinal measurement performed on step d3) and the depth measurement provided through said ultrasonic flaw detector.

14. Method for performing a welding analysis according to any one of the preceding claims, wherein the image sequences and the data detected during said scanning and corresponding to said flaw are acquired and stored on said acquisition unit.

15. Device adapted to store the images and/or the image sequences detected during at least one scanning through at least one ultrasonic probe of a welding in a material, said device comprising a video acquisition unit adapted to be connected to an ultrasonic flaw detector.
